# DEMANDE DE BREVET EUROPEEN

(11) **EP 1 445 183 A1**
(43) Date de publication de la demande: **11.08.2004**
(21) Numéro de dépôt: 03370037.8
(22) Date de dépôt: 18.11.2003
(51) Int. Cl.: B62K 23/06

(54) **Poignée de commande déboîtable pour véhicule à guidon**

(30) Priorité: 07.02.2003 FR 0301482
(71) Demandeur: Voelcker, Jean-Marie, 62150 Bajus (FR); Delpierre, Francis, 62150 Houdain (FR)
(72) Inventeur: Voelcker, Jean-Marie, 62150 Bajus (FR); Delpierre, Francis, 62150 Houdain (FR)
(74) Mandataire: Duthoit, Michel

(57) **Abrégé**

La présente invention concerne une poignée de commande, notamment de frein ou d'embrayage, pour véhicule à guidon, comprenant des moyens de support (2) assujettis audit guidon (3) et un levier de commande (4) qui, en fonctionnement normal, est apte à s'articuler en rotation (25) par rapport audit support (2) autour d'un axe (5) d'articulation pour actionner une commande.

Selon l'invention, ladite articulation est ouverte et lesdits moyens de support (2) constituent un pivot (7) contre lequel ledit axe est maintenu en position normale par des moyens de rappel (8), de sorte qu'en cas de choc contre ledit levier (4), ledit axe (5) puisse se déboîter desdits moyens de support (2) par pivotement sur ledit pivot (7), puis à se replacer contre le pivot (7) lorsque la contrainte n'existe plus.

## Description

La présente invention concerne une poignée de commande, notamment de frein ou d'embrayage, pour véhicule à guidon.

Bien que plus particulièrement prévu pour des véhicules de type deux roues, tels que bicyclette ou motocyclette, il reste tout à fait envisageable d'équiper d'autres véhicules à guidon d'une telle poignée de commande. Il s'agira par exemple de motoculteurs, de scooters ou encore de quad, que ces véhicules soient à deux, trois ou quatre roues.

Les poignées de commande de ce type comportent généralement un support fixé au guidon du véhicule et un levier, articulé sur ledit support, et relié à un câble de commande d'un mécanisme, notamment de frein ou d'embrayage. En actionnant le levier, celui-ci exerce une translation sur le câble de commande qui agit à son tour sur le mécanisme commandé.

En cas de chute ou de choc violent, par exemple lors d'une compétition, le levier de la poignée de commande, du fait de sa position proéminente par rapport au guidon, doit résister à des contraintes importantes pouvant aboutir à la rupture du levier ou même du support.

En cas de rupture, le véhicule devient inutilisable même s'il n'est que partiellement détérioré. De plus, au niveau de la rupture, le levier cassé présente des arêtes vives particulièrement dangereuses non seulement pour le conducteur, mais éventuellement pour les tierces personnes. Ce sont les raisons pour lesquelles la Fédération Internationale de Motocyclettes (FIM) a interdit aux concurrents, dans son règlement relatif aux compétitions, la participation aux compétitions lorsqu'un levier de poignée de commande de leur motocyclette n'est pas entier.

Ainsi, aussi bien pour des raisons de sécurité, d'utilisation que d'admission à concourir, il est particulièrement intéressant de mettre au point des poignées de commande évitant la rupture ou la détérioration du levier en cas de chute ou de choc violent.

A cet égard, on connaît une poignée de commande dont le levier est constitué de deux pièces, un corps articulé au support de poignée et une tige formant levier proprement dit, assujettie au corps par l'intermédiaire d'un simple picot emboîté dans un alésage adéquat du corps, qui peut se désolidariser du corps.

Cependant, la structure d'une telle poignée est particulièrement complexe, ce qui rend sa fabrication onéreuse, son entretien et sa réparation difficile.

De plus, des butées sont prévues pour empêcher la tige formant levier de se désolidariser du corps, lors d'une utilisation normale. Mais, ces butées constituent des pièces d'usure particulièrement sollicitées, notamment pendant les compétitions. Cela rend une telle poignée peu fiable à l'usage et nécessite en outre un entretien régulier.

Le but de la présente invention est de proposer une poignée de commande, notamment de frein ou d'embrayage, pour véhicule à guidon, qui pallie les inconvénients précités.

En particulier, une telle poignée de commande présentera une grande simplicité de fabrication et une bonne robustesse.

Un autre but de l'invention est de proposer une poignée de commande qui permette d'éviter la rupture du levier en cas de chute ou de choc violent.

Un autre but de l'invention est de proposer une poignée de commande d'entretien et de réparation aisée.

Encore un autre but de l'invention est de proposer une poignée de commande peu onéreuse et résistante.

D'autres buts et avantages de l'invention apparaîtront au cours de la description qui va suivre, qui n'est donnée qu'à titre indicatif et qui n'a pas pour but de la limiter.

Ainsi, l'invention concerne une poignée de commande, notamment de frein ou d'embrayage, pour véhicule à guidon comprenant des moyens de support assujettis audit guidon et un levier de commande qui, en fonctionnement normal, est apte à s'articuler en rotation autour d'un axe d'articulation pour actionner une commande, caractérisée en ce que ladite articulation est ouverte et lesdits moyens de support constituent un pivot contre lequel ledit axe est maintenu en position normale par des moyens de rappel, de sorte qu'en cas de choc contre ledit levier, ledit axe puisse se déboîter desdits moyens de support par pivotement sur ledit pivot, puis à se replacer contre le pivot lorsque la contrainte n'existe plus.

L'invention sera mieux comprise à la lecture de la description, accompagnée des dessins qui lui sont annexés, parmi lesquels :
- la figure 1 est une vue en coupe longitudinale d'une poignée de commande conforme à l'invention,
- la figure 2 est une vue en perspective de moyens de support d'une poignée de commande conforme à l'invention,
- la figure 3 est une vue en perspective éclatée selon une direction sensiblement transversale, d'une poignée de commande conforme à l'invention.

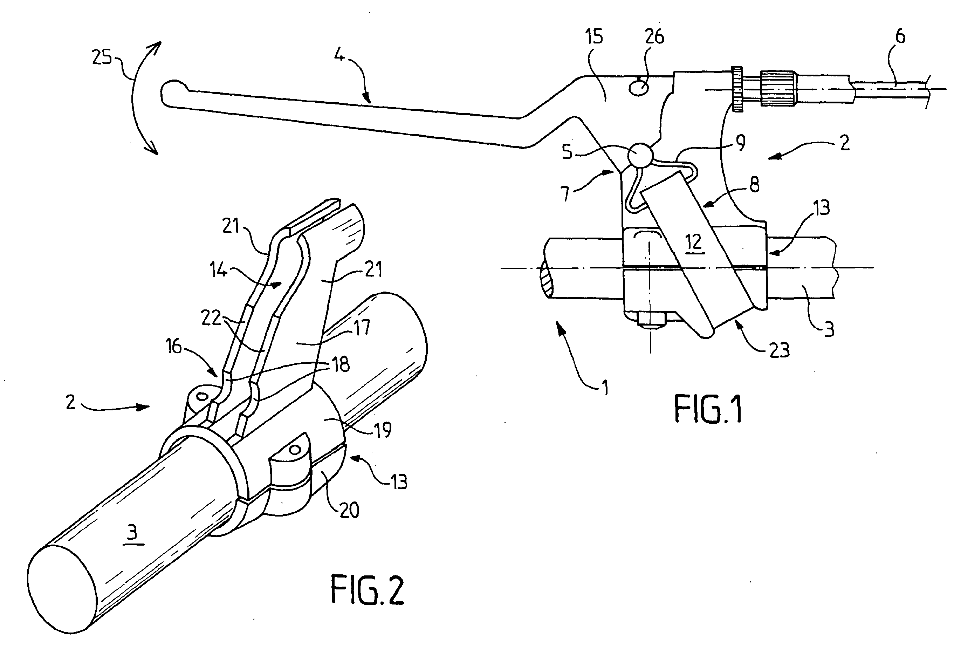

Comme illustrée aux figures 1 à 3, l'invention concerne une poignée de commande 1 de type à levier 4, pour véhicule à guidon. Une telle poignée comprend des moyens de support 2 assujettis au guidon 3 du véhicule. Dans les figures, seule une partie des tubes constituant le guidon de tels véhicules est illustrée, mais on utilisera le terme guidon pour le désigner globalement.

Une telle poignée comprend en outre un levier de commande 4 articulé en rotation, selon les flèches 25, autour d'un axe 5 d'articulation, par rapport aux moyens de support 2.

Un câble de commande 6 est assujetti audit levier 4, de sorte que lorsque le conducteur actionne le levier 4, cela aboutit à une translation du câble de commande 6 qui à son tour permet d'agir sur un mécanisme, par exemple un frein ou un embrayage.

De façon connue de l'homme du métier, le câble de commande 6 est muni à son extrémité coopérant avec le levier 4 d'un pion 26 logé dans une réservation 27 de la partie supérieure de la tête 15 du levier 4.

Conformément à l'invention, l'articulation du levier 4 par rapport au support 2 est ouverte, c'est-à-dire que l'axe 5 d'articulation du levier n'est pas bloqué dans le support 2, mais coopère de manière amovible avec ledit support, selon une translation radiale et/ou longitudinale dudit axe.

Ainsi, lesdits moyens de support 2 constituent un pivot 7 par rapport auquel ledit axe 5 peut entrer en translation radiale et/ou longitudinale. En d'autres termes, ledit axe 5 peut basculer par rapport audit support 2.

Pour assurer un bon fonctionnement de la poignée de commande, ledit axe 5 et donc, ledit levier 4, est maintenu contre ledit pivot 7 par des moyens de rappel, de sorte que :
- en fonctionnement normal, les moyens de rappel 8 de l'axe 5 permettent de maintenir le levier 4 en position articulée (flèche 25) par rapport aux moyens de support 2, ledit axe se trouve donc en position de travail ;
- en cas de choc contre ledit levier 4, ledit axe 5 peut se déboîter desdits moyens de support 2 par pivotement sur ledit pivot 7, puis à se replace contre le pivot 7 lorsque la contrainte n'existe plus. On considère qu'un te! pivotement est la résultante d'une translation radiale et/ou longitudinale dudit axe 5.

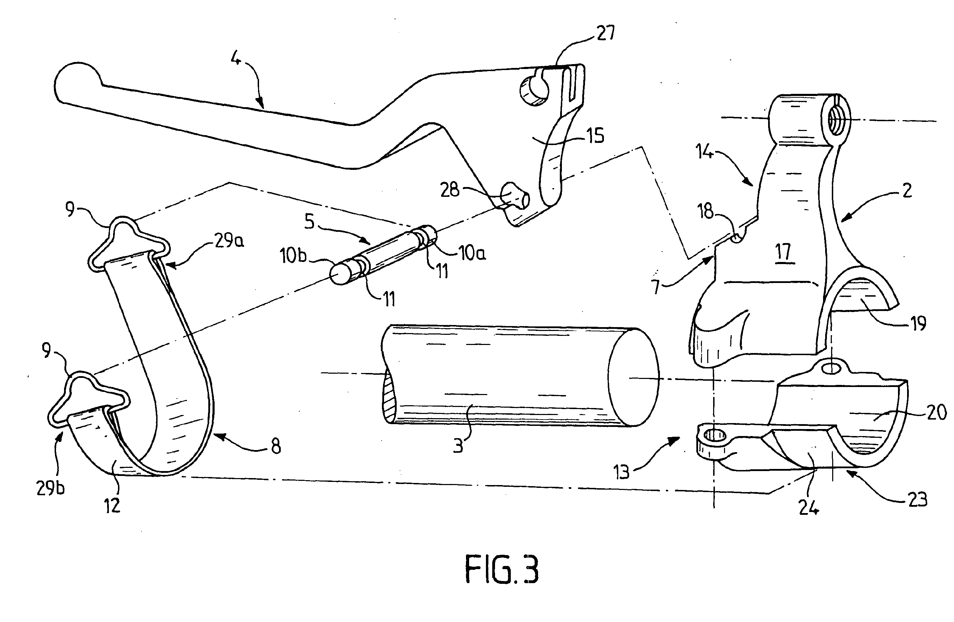

Pour cela, selon une première variante, ledit axe 5 est logé dans un orifice traversant 28 prévu dans la partie inférieure de la tête 15 du levier 4. Ainsi, comme le montre particulièrement la figure 3, l'axe 5 et les moyens de rappel 8 permettent de positionner le levier 4 dans les moyens de support 2, au niveau de moyens de réception 14 de la tête 15 du levier 4.

Selon une seconde variante, ledit axe 5 est prévu solidaire de la partie inférieure de la tête 15 du levier 4, contrairement à la précédente variante, dans laquelle il peut coulisser selon son axe longitudinal dans ledit orifice traversant 28. Dans cette seconde variante, non illustrée, ledit axe 5 est constitué de deux tétons cylindriques coaxiaux s'étendant de part et d'autre de la tête 15 dudit levier 4.

Les moyens de rappel 8 sont pourvus de moyens de prise coopérant avec les extrémités 10a, 10b de l'axe 5 et entourent le guidon 3, c'est-à-dire que les moyens de rappel passent autour du guidon 3 et particulièrement dans la zone du guidon 3 diamétralement opposée au levier 4.

Selon une caractéristique particulière de l'invention, les extrémités 10a, 10b de l'axe 5 sont pourvues de gorges 11 circonférentielles, aptes à coopérer avec des étriers 9 placés aux extrémités 29a, 29b des moyens de rappel et constituant des moyens de prise des moyens de rappel 8 sur l'axe 5. Lesdits étriers 9 pourraient être remplacés par des ferrets.

Selon une autre variante, non illustrée, les moyens de rappel 8 sont en prise avec les extrémités 10a, 10b de l'axe 5 par l'intermédiaire de vis épaulées ou encore à l'aide de circlips. Bien entendu, tout autre moyen de prise à la portée de l'homme de l'art reste envisageable.

Avantageusement, les moyens de rappel 8 se présentent sous la forme d'un élément élastique 12, tel qu'un ruban, une sangle ou une tresse élastique, comme illustré aux figures 1 et 3. Il est également envisageable d'utiliser un ressort hélicoïdal ou tout autre moyen de rappel, notamment élastique.

On va maintenant décrire plus particulièrement, en référence à la figure 2, les moyens de support 2 d'une poignée de commande conforme à l'invention.

Avantageusement, les moyens de support 2 sont constitués de deux parties, une partie inférieure et une partie supérieure. La partie inférieure constitue des moyens de fixation 13 au guidon 3 et la partie supérieure comporte des moyens de réception 14 de la tête 15 du levier 4 et des moyens de réception 16 de l'axe 5, ces derniers étant situés de part et d'autre des moyens de réception 14 de la tête 15 du levier 4. Avantageusement, les moyens de réception 16 de l'axe 5 forment en outre ledit pivot 7 pour l'axe 5.

Les moyens de fixation 13 au guidon 3 se présentent avantageusement sous la forme d'une bride constituée de deux demi colliers 19, 20 enserrant ledit guidon 3 et raccordés entre eux par deux vis, non illustrés, qui rapprochant les deux demi colliers, viennent pincer le guidon 3 et assurent ainsi le blocage des moyens de support 2. L'un desdits demi colliers est assujetti auxdits moyens de réception 14 de la tête 15 du levier 4.

Selon une autre variante, lesdits moyens de fixation 13 de la poignée au guidon 3 peuvent se présenter sous la forme d'un alésage fendu, selon une technique connue de l'homme du métier.

Les moyens de réception 14 de la tête 15 du levier 4 se présentent sous la forme d'une chape 17 constituant un berceau pour l'axe 5 assujetti à la tête 15 dudit levier 4. La chape 17 est délimitée par deux parois 21 qui s'inscrivent dans des plans sensiblement parallèles à un plan longitudinal du guidon 3. Elle présente une ouverture par laquelle on peut passer la tête 15 du levier 4 pour la positionner dans ladite chape 17. Précisons que le plan de rotation normal du levier 4 est sensiblement parallèle au plan des parois 21 définies ci-dessus.

Dans leur partie inférieure, le chant des parois 21 de la chape 17 comporte les moyens de réception 16 de l'axe 5. Ceux-ci se présentent avantageusement sous la forme de demi-paliers 18 aptes à recevoir l'axe 5.

Comme illustré aux différentes figures, pour monter une telle poignée de commande, après avoir fabriqué les différentes pièces, notamment par moulage, on commence par fixer les moyens de support 2 au guidon 3 en plaçant la bride constituée des deux demi colliers 19, 20 sur le guidon 3.

Puis, selon une première variante, on place l'axe 5 dans le trou traversant 28 prévu dans la partie inférieure de la tête 15 du levier 4 et on glisse la tête du levier 4 dans la chape 17 en faisant reposer l'axe 5 sur les deux demi-paliers 18, de part et d'autre de la tête 15 du levier 4. Selon une seconde variante, où l'axe 5 est solidaire de la tête 15 du levier 4, on peut glisser directement ladite tête dans la chape 17.

Il suffit ensuite d'installer les moyens de rappel 8 pour maintenir le levier 4 en position normale. Pour cela, on met en prise une première extrémité 29a des moyens de rappel 8 avec une première extrémité 10a de l'axe 5, on fait passer les moyens de rappel 8 sous le guidon 3, à l'opposé du levier 4 puis on met en prise la seconde extrémité 29b du moyen de rappel 8 avec la seconde extrémité 10b de l'axe 5.

Avantageusement, on prévoit des moyens de guidage 23 des moyens de rappel 8, notamment pour les maintenir dans une position optimale pour exercer leur effet de rappel.

Lesdits moyens de guidage pourront par exemple se présenter sous la forme d'une gorge 24 prévue avantageusement dans le demi collier 20 des moyens de fixation 13 opposé au levier 4, comme illustré aux figures 1 et 3.

Si l'on considère le plan P de rotation normale du levier 4 et le plan Q perpendiculaire au plan P, passant par l'axe 5 de rotation du levier 4, une position optimale des moyens de rappel 8 est telle que les moyens de rappel 8 entourent le guidon 3 en passant dans le demi-espace délimité par le plan Q et ne contenant pas le levier 4.

En cas de chute, si le levier 4 reçoit un choc selon une direction autre que celle de sa rotation normale 25 autour de l'axe 5, le fait que l'articulation soit ouverte, et donc que l'axe 5 puisse entrer en translation radiale et/ou longitudinale par rapport aux moyens de support 2, lui permet de se déboîter des moyens de réception 16 de l'axe 5, pour autant que la force exercée sur le levier 4 lors du choc soit supérieure à la force de rappel des moyens de rappel 8. Dans ce cas, ledit axe 5 peut basculer sur lesdits moyens de réception 16, en particulier lesdits demi-paliers 18.

Pour éviter que le levier 4 ne se brise, il suffit donc de choisir lesdits moyens de rappel 8 de sorte que leur force de rappel soit inférieure à la force suffisante pour briser le levier 4. Ces moyens de rappel permettront en outre de replacer la poignée dans sa position normale lorsque la contrainte la déboîtant n'existe plus, et particulièrement de replacer l'axe 5 contre ledit berceau 16, 18 du pivot 7.

Naturellement, d'autres modes de mise en oeuvre, à la portée de l'homme de l'art, auraient pu encore être envisagés sans pour autant sortir du cadre de l'invention.

En particulier, une telle poignée de commande pourrait servir pour actionner des commandes autres que des commandes par câble, par exemple des commandes hydrauliques.

## Revendications

1. Poignée de commande (1), notamment de frein ou d'embrayage, pour véhicule à guidon comprenant des moyens de support (2) assujettis audit guidon (3) et un levier de commande (4) qui, en fonctionnement normal, est apte à s'articuler en rotation (25) autour d'un axe (5) d'articulation pour actionner une commande, **caractérisée en ce que** ladite articulation est ouverte et lesdits moyens de support (2) constituent un pivot (7) contre lequel ledit axe (5) est maintenu en position normale par des moyens de rappel (8), de sorte qu'en cas de choc contre ledit levier (4), ledit axe (5) puisse se déboîter desdits moyens de support (2) par pivotement sur ledit pivot (7), puis à se replacer contre le pivot (7) lorsque la contrainte n'existe plus.

2. Poignée de commande selon la revendication 1, dans laquelle lesdits moyens de rappel (8) sont pourvus de moyens de prise coopérant avec les extrémités (10a, 10b) dudit axe (5) et entourent ledit guidon (3).

3. Poignée de commande selon la revendication 2, dans laquelle ledit axe (5) présente à ses extrémités (10a, 10b) une gorge (11) circonférentielle, apte à coopérer avec des étriers métalliques (9) constituant lesdits moyens de prise des moyens de rappel (8).

4. Poignée de commande selon la revendication 2, dans laquelle lesdits moyens de rappel (8) sont en prise avec les extrémités (10a, 10b) dudit axe (5) par l'intermédiaire de vis épaulées.

5. Poignée de commande selon l'une quelconque des revendications précédentes, dans laquelle lesdits moyens de rappel (8) se présentent sous la forme d'un ressort hélicoïdal ou d'un élément élastique (12).

6. Poignée de commande selon l'une quelconque des revendications précédentes, dans laquelle lesdits moyens de support (2) comportent des moyens de fixation (13) audit guidon (3), des moyens de réception (14) de la tête (15) du levier de commande (4) et des moyens de réception (16) dudit axe (5) situés de part et d'autre des moyens de réception (14) de la tête (15) dudit levier (4), lesdits moyens de réception (16) dudit axe (5) formant ledit pivot (7) pour ledit axe (5).

7. Poignée de commande selon la revendication 6, dans laquelle lesdits moyens de réception (14) de la tête (15) du levier (4) se présentent sous la forme d'une chape (17) constituant un berceau pour l'axe (5) assujetti à la tête (15) dudit levier (4) et dans laquelle les moyens de réception (16) dudit axe (5) se présentent sous la forme de demi-paliers (18).

8. Poignée de commande selon la revendication 7, dans laquelle lesdits demi-paliers (18) sont prévus sur le chant (22) des parois (21) de ladite chape (17).

9. Poignée de commande selon la revendication 6 ou 7, dans laquelle lesdits moyens de fixation (13) au guidon (3) se présentent sous la forme d'une bride dont les deux parties (19, 20) enserrent ledit guidon (3).

10. Poignée de commande selon l'une quelconque des revendications précédentes, dans laquelle lesdits moyens de support (2) sont munis de moyens de guidage des moyens de rappel (8).

11. Poignée de commande selon la revendication 9, dans laquelle lesdits moyens de guidage se présentent sous la forme d'une gorge où sont logés lesdits moyens de rappel (8).
